Europäisches Patentamt

**European Patent Office**

Office européen des brevets

(11) Publication number: **0 246 833**
**A2**

# EUROPEAN PATENT APPLICATION

(21) Application number: **87304368.1**

(22) Date of filing: **18.05.87**

(51) Int. Cl.³: **F 16 B 4/00**

(30) Priority: **20.05.86 GB 8612254**
**13.03.87 GB 8706028**

(43) Date of publication of application:
**25.11.87 Bulletin 87/48**

(84) Designated Contracting States:
**BE DE FR GR SE**

(71) Applicant: **BLI Limited**
**Suite 21, Don House 30/38 Main Street**
**Gibraltar(GI)**

(72) Inventor: **Coombs,Douglas Leonard**
**Calle San Magin 68 3-2**
**Palma Mallorca(ES)**

(74) Representative: **Bankes, Stephen C. D. et al,**
**Baron & Warren 18 South End Kensington**
**London W8 5BU(GB)**

(54) A Joint for tubular components.

(57) A joint for interconnecting two components (11, 12) of a tubular assembly such as a piece of furniture or a space frame, usually made from rigid plastics mouldings. A substantially cylindrical spigot part (13) fits coaxially in a socket part (14), the outer surfaces of the two components (11, 12) preferably being flush with one another. To avoid the need for accurate moulding or machining of both parts, the inner surface of the socket or the outer surface of the spigot (preferably the former) is formed with axially extending splines (16) or other lands, the relative diameters of the engaging parts being such as to form an interference fit.

Fig.1

## A JOINT FOR TUBULAR COMPONENTS

The present invention relates to furniture and fittings having tubular frameworks assembled from plastic components, such as, plain tubes and corner and junction pieces, and more particularly, to a novel joint for interconnecting the components.

The components of such tubular frameworks are generally injection moulded from suitable plastics material and are adapted to be interconnected by joints comprising a substantially cylindrical spigot on one component fitting coaxially into a complementary socket within a contiguous component. The spigot may be moulded with a reduced diameter so that, in the assembled joint, the exterior surfaces of the two components are flush. Where it is unnecessary for the components to be subsequently separable, adhesive may be used between the spigot and socket to produce a more permanent joint.

When producing the components, it is a problem accurately to mould both the internal and external surfaces of the components. Hence, only one surface, usually the external surface, is the subject of accurate moulding and in order to provide a satisfactory joint, either the socket part or the spigot part, depending on the surface accurately moulded has, hitherto, had to be finished with a reaming or machining operation to produce a truly cylindrical or parallel sided part, which operation is an additional step adding to the cost of the components.

It is an object of the present invention to obviate this additional reaming or machining step and to enable satisfactory joints between moulded components of a tubular framework to be achieved directly with moulded spigot and socket parts and without the need for any additional finishing of these parts.

To this end, the invention consists in a joint for interconnecting two components of a tubular assembly, in which a substantially cylindrical spigot part fits coaxially into a socket part and in which one of these parts is formed with axially extending splines, preferably of V-shaped cross-section, or other radially projecting lands, relative diameters of the engaging surfaces of the spigot and socket parts being such as to form an interference fit.

Preferably, the splines or lands are formed on the part whose surface is not subject to accurate moulding. Hence, normally the external surfaces of the components will be accurately moulded, which will provide a spigot having an accurately-formed cylindrical external surface, and the splines or lands will be formed on the inside of the socket. The splines or lands enable the socket to make a firm "crush" fit onto the parallel spigot and the invention enables a satisfactory joint to be made without the need to ream the socket, as has hitherto been the case. In order to make a permanent joint, adhesive, which may simply take the form of a solvent for temporarily softening the splines or lands, may be used between the spigot and the socket. The invention is equally suitable for use in factory finished frameworks as well as DIY systems which can be cut to size and assembled by customers who do not have access to expensive equipment.

In one embodiment of the invention, axially extending splines are formed about the entire circumference of the spigot or socket part, as the case may be. In a second embodiment the splines are arranged in spaced, preferably equally spaced, groups about the circumference of the associated part. Alternatively, instead of splines, axially extending raised lands may be formed at spaced positions about the circumference of the spigot or socket part. These axially extending lands are preferably of uniform width and are only raised a small height about the adjacent circumferential portions of the associated part. They may have a flat or relatively shallow concave, circumferential face and may have tapered or bevelled axial edges leading into the adjacent circumferential portions of the associated part.

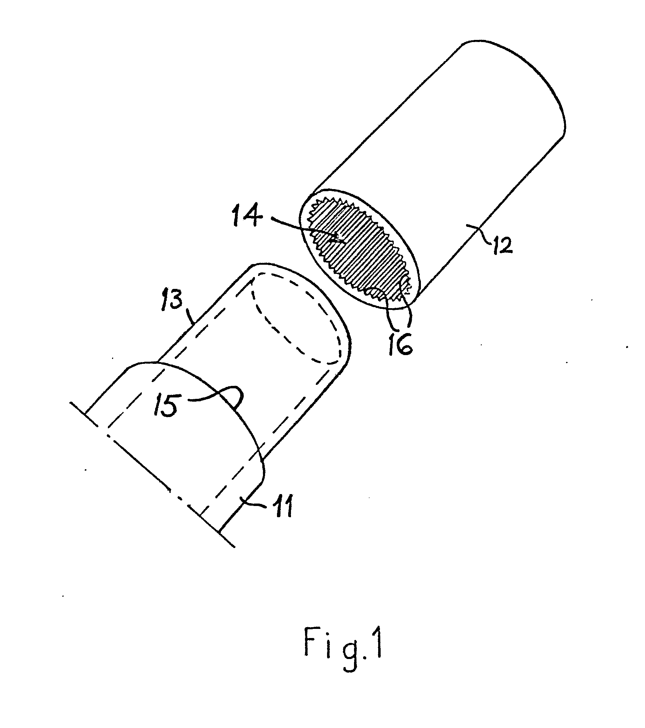

In order that the invention may be more readily understood, reference will now be made to the accompanying drawings, in which Figures 1 to 3 respectively illustrate exploded views of three different embodiments of the invention.

Referring first to Figure 1, the joint illustrated is made between two tubular components, 11,12, which are injection moulded from plastics material and have accurately moulded external surfaces. The component 11 has a cylindrical spigot part 13 projecting coaxially from one end of the component and of reduced diameter in relation to the main body of the component 11. The adjacent end of the internal bore of the other component 12 comprises a socket 14 for receiving the spigot 13 and when this spigot is fitted into the socket and the components are pushed together to complete the joint, the end of the component 12 abuts the shoulder 15 between the spigot and the main body of the component 11 to form a flush joint.

On its inside defining the socket part 14, the component 12 is formed with a multiplicity of small axially extending splines 16 which are V-shaped in cross-section. The internal pitch circle diameter of this splined socket part 14 is slightly smaller than the external diameter of the parallel spigot 13. Hence, the spigot is an interference fit in the socket and, when the spigot is pushed into the socket, the splines are crushed so that a firm joint is produced which is resistant to axial separation of the components.

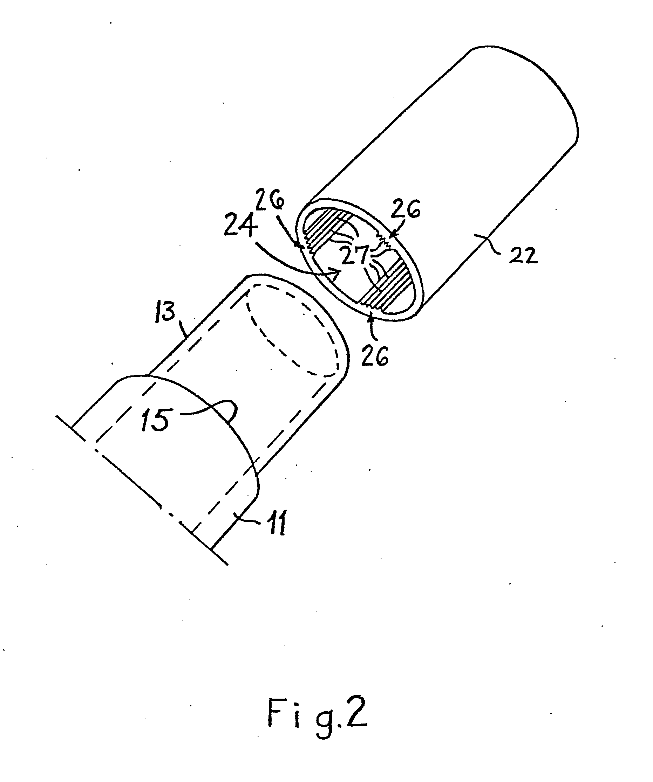

Referring to Figure 2, the joint illustrated is made between two tubular components 11, 22 which again are injection moulded from plastics material and have accurately moulded external surfaces. The component 11 is as described in relation to Figure 1.

On its inside defining the socket 24, the component 22 is formed with three groups 26 of splines 27 equally spaced about the internal circumference of the socket part. Each group 26 comprises a multiplicity of small axially extending splines (five in the embodiment illustrated) which are V-shaped in cross-section. As in the embodiment of Figure 1, the diameter of the splines is slightly smaller than the external diameter of the paralled spigot 3, again forming an interference fit in the socket.

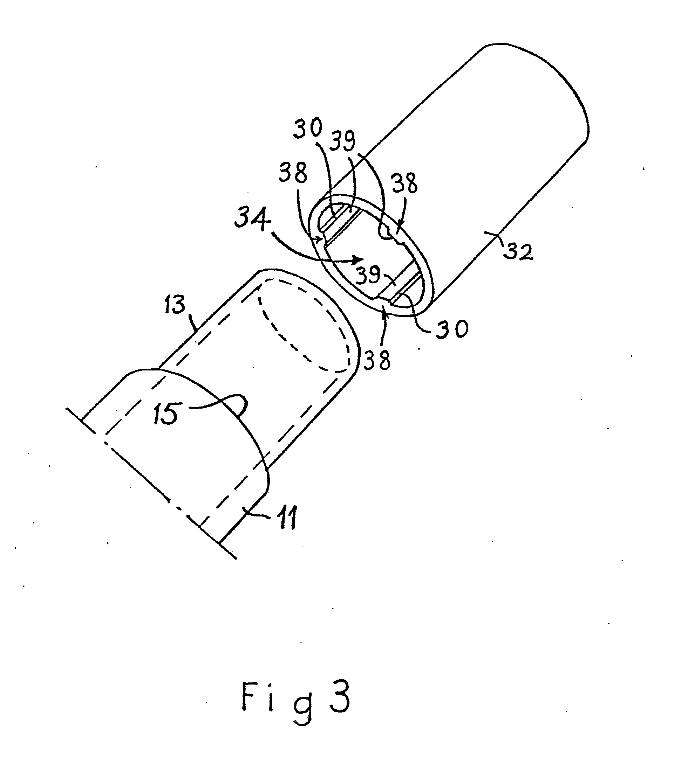

Figure 3 illustrates a third embodiment which is made between two components 11,32 similar to those of Figure 2 except that, in this embodiment, the groups 26 of splines are replaced by narrow axially extending lands 38 of uniform width. These lands are raised a small height above the adjacent circumferential portions of the socket 34 of the part 32. They are formed with shallow concave circumferential faces 39 and have bevelled or tapered axially extending edges 30 joining the lands to the adjacent circumferential portions of the socket.

Similarly to the first embodiment, the spigot 13 is an interference fit in the socket 34 and the lands 38 enable a firm joint to be produced which is resistant to axial separation of the components.

If desired, in all three embodiments, an adhesive, which may for example be a solvent which temporarily softens the plastics material of the engaging surfaces may be used between the spigot 13 and socket 14,24 or 34 to provide a permanent joint.

Whilst particular embodiments have been described, it will be understood that modifications can be made without departing from the scope of the invention. For example, instead of three groups 26 of splines or three lands 38, four or five or another number of equally spaced groups of splines or lands may be employed. Also, the number of splines 27 in a group 26 may be varied as required or appropriate.

## CLAIMS

1. A joint for interconnecting two components (11 & 12, 22 or 32) of a tubular assembly, in which a substantially cylindrical spigot part (13) fits coaxially in a socket part (14,24,34) and in which one of these parts (14,24, 34) is formed with splines (16,27) or other radially projecting lands (38) extending axially along a surface thereof which contacts a surface of the other part, the relative diameters of the engaging surfaces of the spigot and socket parts being such as to form an interference fit.

2. A joint according to claim 1 wherein the splines or lands are formed on a part whose surface is not subject to accurate moulding.

3. A joint according to claim 2 wherein the splines or lands are formed on the inner surface of the socket part (14,24,34).

4. A joint according to any preceding claim wherein one of the said contacting surfaces is formed with splines (16,27) thereon of V-shaped cross section.

5. A joint according to any proceding claim wherein said axially extending splines (16) are formed about the entire circumference of the spigot or socket part.

6. A joint according to any one of claims 1 to 4 wherein said axially extending splines (27) are arranged in groups (26) spaced from one another around the associated part (22).

7.     A joint according to any one of claims 1 to 3 wherein one of the said engaging surfaces is formed with axially extending raised lands (38) formed at circumferentially spaced positions around the associated part (32).

8.     A joint according to claim 7 wherein the raised lands (38) have flat or shallow concave circumferential faces (39) with tapered or bevelled axial edges (30).

9.     A joint according to any preceding claim wherein an adhesive is applied between the engaging surfaces of the spigot and socket parts.

Fig.1

0246833

Fig.2

Fig 3